# EUROPEAN PATENT SPECIFICATION

(11) **EP 3 905 709 B1**
(45) Date of publication and mention of the grant of the patent: **04.12.2024**
(21) Application number: 21170353.3
(22) Date of filing: 26.04.2021
(51) Int. Cl.: H04Q 1/02, G02B 6/44

(54) **OUTDOOR TELECOMMUNICATIONS CABINET**
FREILUFTTELEKOMMUNIKATIONSSCHRANK
ARMOIRE DE TÉLÉCOMMUNICATION EXTÉRIEURE

(30) Priority: 28.04.2020 IT 202000009184
(43) Date of publication of application: 03.11.2021
(73) Proprietor: Prysmian S.p.A., 20126 Milan (IT)
(72) Inventor: LE DISSEZ, Arnaud, F-34160 Sussargues (FR); FERRER, Jean Paul, F-38460 Siccieu (FR); CHANTEAU, Pierre Louis, F-4900 Angers (FR)
(74) Representative: Porta & Consulenti Associati S.p.A.

(56) References cited:
- WO-A1-2018/065423
- US-A1- 2005 002 633
- US-A1- 2007 165 995

## Description

The present disclosure relates to an outdoor telecommunications cabinet. In particular, the present disclosure relates to an outdoor cabinet for optical access networks, in particular FTTX applications.

In the field of modern communication systems and together with the rapid growth of the so-called broadband services provided by one or more telecommunication operators, a progressive implementation of optical fibre cabling is underway, which allow to effectively transport the quantity of data necessary for such services (for example, telephone, data and/or video services) to an end user.

Optical access networks generally called FTTX, such as FTTH (Fibre To The Home), FTTP (Fibre To The Premises), FTTB (Fibre To The Building), FTTC (Fibre To The Cabinet), are optical access networks providing a number of end users with broadband communication services from telecommunication operators, in particular with services requiring data transmission at a very high rate, for example of the order of some Mbit/s.

A mutualization point in a FTTX network is a point wherein more external fibre-optic telecommunication networks, each handled by a respective telecommunication operator, can be connected to a user network, handled by a user network operator.

A mutualization point is typically implemented in a cabinet comprising optical fibre cabling and accessories.

The cabinet may be indoors (for example, when installed in the basement of a building) or outdoors (for example, when installed on a street).

In the first case (indoors cabinet), the user network is typically deployed inside a building from the cabinet to each user's apartment.

In the second case (outdoors cabinet, also known as "street cabinet"), the user network is typically deployed from the cabinet to individual user's houses, premises, shops or enterprises, in a residential, commercial or industrial area.

US 2007/165995 and US 2005/0002633 disclose telecommunications cabinets.

US 10, 345, 539 discloses a telecommunication cabinet comprising a splitter preconfigured with a secondary cable (at a cable entry) and a plurality of cables (at cable exits) terminated by connectors, and a plurality of adapters connected to a plurality of customer equipment cables. The free end of the secondary cable is spliced into an end of a OSP (outside plant) cable and the connectors of the plurality of cables are pre-inserted within connector holders snapped into suitably openings of the cabinet, waiting to be successively inserted into the adapters connected to the plurality of customer equipment cables. When a customer connection is required, a customer equipment cable is led into cabinet and terminated with a connector. This connector is inserted within a rear opening of one of the plurality of adapters. Alternatively, when cabinet is installed, the rear of all adapters may have customer equipment cables prewired and these cables led to the customer premises in anticipation of future customer hookups. When such a prewired customer desires a live connection, a cable of the plurality of cables from the splitter is selected and its connector is removed from respective connector holder to be inserted within a front opening of the appropriate adapter.

EP 2 191 315 discloses a modular system for the connection of an external communication network to a user network of a building, comprising:
- at least one user module including: at least one passage opening of a connection cable of said user network comprising a plurality of optical fibres associated to respective users, at least one support tray of splices between the optical fibres of the connection cable of the user network and respective pigtails, and a plurality of adapters associated to respective pigtails;
- at least one operator module including: at least one inlet opening of at least one connection cable to the external communication network comprising a plurality of optical fibres, and at least one outlet opening of a plurality of fibre optic connection elements connected to the external communication network and provided with a connector at a terminal end thereof;
wherein the external communication network is operatively associated to the user network by means of a connection of the connectors of the fibre optic connection elements with respective selected adapters of the user module.

The Applicant notes that the solution disclosed by US 10, 345, 539 does not contemplate, and is not suitable for, the case of a mutualization outdoor cabinet wherein multiple external fibre-optic telecommunication networks, each handled by a respective telecommunication operator, can be connected to a user network, handled by a same user network operator.

Indeed, in a mutualization outdoor cabinet, every time an end user switches from a current telecommunication operator to a new, different telecommunication operator (e.g. offering a better economical offer), new optical fibre cabling and accessories have to be installed in the cabinet (if not already present for such operator) and new connections have to be made to connect the end user to the right cabling, associated to the new telecommunication operator. The cabinet is thus accessed by multiple telecommunication operators that can create a certain degree of mess over the time. In a dense area like inside an outdoor cabinet wherein hundreds of optical fibres with related accessories can be installed, after few years of exploitation the situation can become very complex in terms of maintenance and cable identifications inside the cabinet. These issues are neither mentioned nor faced by US 10,345,539.

On the other side, the Applicant notes that the solution disclosed by EP 2 191 315 relates to an indoor cabinet made of a plurality of structurally independent user/operator modules, which is not suitable for an outdoor cabinet. Indeed, the use of structurally independent modules, connected to each other via a patching channel defined by coaxial openings provided in the modules, may impair the robustness, compactness and water-tightness of the cabinet that are important for outdoors applications.

The Applicant thus faced the technical problem of providing an outdoor cabinet which is suitable (e.g. in terms of robustness, compactness and water-tightness) for outdoor applications and, at the same time, enables to improve management of optical fibre cabling and connections when the cabinet is accessed by different technicians (operating for different telecommunication operators), in particular in case of mutualization applications.

The present disclosure thus relates to an outdoor telecommunications cabinet according to claim 1 as well as to an assembly according to claim 14 and a method of installation according to claim 15.

In particular, in a first aspect, the present disclosure relates to an outdoor telecommunications cabinet for connecting an external communication network to a user network, made of a single piece case comprising:
- a first area associated with a first closure door, housing:
   - a plurality of optic adapters having opposite first and second sides;
   - a corresponding plurality of connecting optical fibres for connection to optical fibres of the user network, the connecting optical fibres having opposite free ends and terminated ends, terminated with respective optical fibre connectors that are respectively engaged with the first sides of the adapters,
   - a corresponding plurality of optical fibre patch cords having opposite first and second ends terminated with respective optical fibre connectors, the optical fibre connectors terminating the first ends being respectively engaged with the second sides of the adapters;
- a second area associated with a second closure door, housing:
   - a connector holder having a plurality of seats adapted to temporaly hold the optical fibre connectors terminating the second ends of the patch cords,
   - a space adapted to house, after installation on site of the cabinet, fibre optic cabling and accessories for connection to the external communication network,
   - the connector holder acting as a temporary parking area for the optical fibre connectors terminating the second ends of the patch cords, waiting to be connected to the optical fibre cabling and/or accessories for connection to the external communication network.

The present disclosure also relates to a method of installation of an outdoor telecommunications cabinet according to the first aspect, comprising:
- mounting the cabinet into a dedicated outdoor place;
- making the connection between the free ends of the connecting optical fibres and respective ends of the optical fibres of the user network in a connection point out from the cabinet.

The outdoor cabinet of the present disclosure, being made, as a single (not modular) piece, enables to provide robustness, compactness and water-tightness that are important for outdoor applications.

Moreover, the single-piece cabinet of the present disclosure is compartmentalized in two distint areas, a first one dedicated to house optical fibre cabling and accessories for connection to the user network and a second one dedicated to house optical fibre cabling and accessories for connection to the external fibre-optic telecommunication networks. Optical fibre patch cords are provided for connecting the optical fibre cabling and accessories of the first area to the optical fibre cabling and accessories of the second area. Moreover, a connector holder in the second area is provided for temporarily parking and protecting second end connectors of the patch cords, waiting to be connected to the optical fibre cabling and accessories of the second area, once installed in the relevant space of the second area. In this way, different telecommunication operators willing to connect their external communication networks to the user network, need only to access the second end connectors of the patch cords parked in the second area while the first area can be completely closed and made accesible only to the user network operator (e.g. by a secured keyed lock). In this way, the user network side -confined in the first area- is secured, while the management of optical fibre cabling and connections in the second area is simpliflied in that the different telecommunication operators willing to connect their external communication networks to end users of the user network, simply have to make a connection of their cabling to the appropriate second end connectors of the patch cords, after extracting them from the connector holder (e.g. in case of a first connection to the end users) or after disconnecting them from the cabling of a previous telecommunication operator (in case the end users switch from one operator to another).

Optical fibres are the most common type of channel for optical communications. An optical fibre is a dielectric (or non-electrically conductive) waveguide comprising a core surrounded by a cladding, both the core and the cladding being typically made of silica-based materials. Core and cladding have different refractive indexes so that total reflection occurs at their boundary, which confines light and allows its transmission along the fibre. An optical fibre typically also comprises a single-layer or double-layer coating (e.g. an acrylate coating) providing mechanical protection to core and cladding and, optionally, a buffer (e.g. in thermoplastic polymer). Optical fibres for optical communications typically have a core with a diameter of about 8-9 microns (for single-mode fibres) or about 50-100 microns (for multi-mode fibres), a cladding with outer diameter of about 125 microns, a coating with outer diameter of about 250 microns and, optionally, a buffer with outer diameter of about 600-1000 microns.

In the present disclosure and claims, the term "optical fibre" is used to indicate a single-fibre cable, that is an optical cable comprising a single optical fibre.

In the present disclosure and claims, the term "connecting optical fibre" is used to indicate an optical fibre length without optical accessories in the middle (such as a mechanical or fused splicings, joints, connectors), with an optical connector pre-installed on one end and exposed fibre at the other, opposite end.

In the present disclosure and claims, the term "optical fibre cable" is used to indicate a multi-fibre cable comprising at least two optical fibres enclosed in a common protective outer jacket.

In the present disclosure and claims, the term "pigtail" is used to indicate an optical fibre length having an optical connector pre-installed on one end and exposed fibre at the other, opposite end.

In the present disclosure and claims, the term "optical fibre patch cord" is used to indicate an optical fibre length having an optical connector pre-installed on both ends, without optical accessories in the middle (such as a mechanical or fused splicings, joints, connectors).

In the present disclosure and claims, the term "optical fibre cabling" is used to indicate single optical fibres, optical fibre cables comprising several fibres, pigtails, optical fibre patch cords and similar elements.

In the present disclosure and claims, the term "accessories" is used to indicate support trays, splicing trays, adapters, connector holders, splitters, winding elements, stowage mandrels, spools, excess cable storage areas, and similar devices.

In the present disclosure and claims, the term "excess length of connecting optical fibre" is used to indicate an excess length with respect to the size of the cabinet.

In the present disclosure and claims, the term "excess length of patch cords" is used to indicate an excess length with respect to a length needed to connect the first area to the second area of the cabinet.

In the present disclosure and claims, the terms "top", "bottom", "front", "rear", "behind", "beside", and similar, used with reference to the cabinet and optical cabling and accessories housed therein, are used with reference to a use condition in which the cabinet is installed on a site.

The present disclosure, in at least one of the aforementioned aspects, can be implemented according to one or more of the following embodiments, optionally combined together.

In an embodiment, the cabinet is a ready-made cabinet wherein the first area, intended for connection to the user network, is prefabricated (e.g. at the manufacturing factory), before installation on site, with all required optical fibre cabling and accessories and connections. On the other side, the second area is pre-fabricated to house the connector holder temporarily parking and protecting the second end connectors of the patch cords, waiting to be connected to the optical fibre cabling and accessories of the external telecommunication network.

The ready-made cabinet advantageously enables to simplify and minimize the installation operations, in particular on the user network side.

In an embodiment, the cabinet is a ready-made cabinet wherein the first area is pre-fabricated (e.g. at the manufacturing factory) with the plurality of optic adapters, the corresponding plurality of connecting optical fibres, and the corresponding plurality of optical fibre patch cords; and the second area is pre-fabricated (e.g. at the manufacturing factory) with the connector holder with the plurality of seats, wherein:
- the optical fibre connectors terminating the connecting optical fibres are pre-engaged with the first sides of the adapters,
- the optical fibre connectors terminating the first ends of the patch cords are pre-engaged with the second sides of the adapters;
- the optical fibre connectors terminating the second ends of the patch cords are pre-engaged with the seats of the connector holder.

In an embodiment, the connecting optical fibres each have an excess length to be deployed out from the cabinet to an external joint for splicing the free ends of the connecting optical fibres to respective free ends of the optical fibres of the user network.

In an embodiment, the connection point is the external joint.

Moreover, the step of making the connection between the free ends of the connecting optical fibres and respective ends of the optical fibres of the user network out from the cabinet comprises:
- deploying the excess length of the connecting optical fibres out from the cabinet to the external joint.

In an embodiment, said step of making the connection further comprises splicing (e.g. by means of fusion or mechanical splicing) the free ends of the connecting optical fibres to the respective free ends of the optical fibres of the user network.

The above provision enables to make the splicing outside the cabinet thereby eliminating the need of making the splicing operation inside the cabinet. Considering that outdoor cabinets are often in locations which makes the splicing procedure not comfortable, this advantageously enables the responsible technicians to make the splicing, which is a quite critical operation, in a more convenient location at the joint wherein they can work more safely and easily. Moreover, in case the outdoor cabinet is damaged or vandalized, and a need arises to replace the connecting optical fibres, the replacement operation is simplified as well for similar reasons. Indeed, inside the cabinet it is sufficient to replace the damaged connecting optical fibres with new connecting optical fibres by engaging the optical fibre connectors at the terminated ends of the new connecting optical fibres with the first sides of the adapters; the critical splicing operation being performed at the joint outside the cabinet. Therefore, it is avoided the risk to replace hundreds of meters of cables connecting the outdoor cabinet with the closest joint outside the cabinet, as in outdoor cabinet commonly in use.

In an embodiment, the excess lengths of the connecting optical fibres are enclosed into at least one optical fibre cable.

In an embodiment, the outdoor telecommunications cabinet further comprises fixing means to fix the at least one optical fibre cable within the cabinet (e.g. to a wall of the cabinet).

In an embodiment, the first area of the cabinet has an opening for enabling said at least one optical fibre cable to exit the cabinet.

In an embodiment, the patch cords have an excess length adapted to be deployed inside the second area for connection to the fibre optic cabling and/or accessories of the external communication network.

The excess length of the patch cords advantageously enables the second end connectors of the patch cords, extracted from the connector holder, to reach the fibre optic cabling and/or accessories of the external communication network, after the latter are inserted in the relevant space of the second area.

In an embodiment, the method of installation of the cabinet further comprises installing the fibre optic cabling and/or accessories of the external communication network in the relevant space of the second area.

In an embodiment, the method of installation of the cabinet further comprises extracting from the connector holder at least part of the optical fibre connectors terminating the second ends of the optical fibre patch cords and connecting them to the fibre optic cabling and/or accessories of the external communication network installed in the relevant space of the second area.

In an embodiment, the second area further comprises stowage mandrels for winding at least part of the excess length of the patch cords about them.

In an embodiment, the method of installation of the cabinet further comprises unwinding at least part of the excess length of the patch cords from the stowage mandrels to make the above connection to the fibre optic cabling and/or accessories of the external communication network installed in the relevant space of the second area.

In an embodiment, the outdoor telecommunications cabinet further comprises guiding passages for guiding the patch cords from the adapters to the stowage mandrels and from the stowage mandrels to the connector holder.

In an embodiment, the first closure door is configured to be locked/unlocked independently from the second closure door. In an embodiment, the first closure door is secured by an electronic or mechanical (e.g. key) lock to restrict access only to authorized technicians.

In an embodiment, the plurality of adapters define at least one adapter array of adapters supported by a common support.

In an embodiment, the seats of the connector holder define at least one array of seats supported by a common support.

In an embodiment, the excess lengths of the connecting optical fibres are over 10 meters; for example, 20 to 50 meters.

In an embodiment, the seats have first open sides configured to receive the optical fibre connectors terminating the second ends of the patch cords, and opposite second sides, which are closed.

In an embodiment, the second closed sides of the seats are closed by means of transparent caps.

The present disclosure also relates to an assembly comprising the outdoor cabinet according to any of the features disclosed above, and a box disposed near the cabinet to store the excess lengths of the connecting optical fibres out from the cabinet, before deployment from the cabinet to the external joint.

In an embodiment, the step of making the connection between the free ends of the connecting optical fibres and respective ends of the optical fibres of the user network comprises deploying the excess length of the connecting optical fibres out from the box to the external joint.

The features and advantages of the present disclosure will be made apparent by the following detailed description of some exemplary embodiments thereof, provided merely by way of non-limiting examples, description that will be conducted by making reference to the attached drawings, wherein:
- figure 1 shows a front view of an outdoor cabinet according to an embodiment of the present disclosure, with open closure doors,
- figure 2 shows a front view of the outdoor cabinet of figure 1, with a first closure door in closed position and second closure door in open position,
- figure 3 shows the inside of a sub-rack housed in a first area of the cabinet of figure 1;
- figure 4 shows the inside of a sub-rack housed in a second area of the cabinet of figure 1;
- figure 5 shows a front view of the sub-rack of figure 4;
- figure 6 shows an assembly comprising the cabinet of figure 1 together with a box for cable storage;
- figure 7 shows the cabinet of figure 1 mounted on a pedestal in a street pavement.

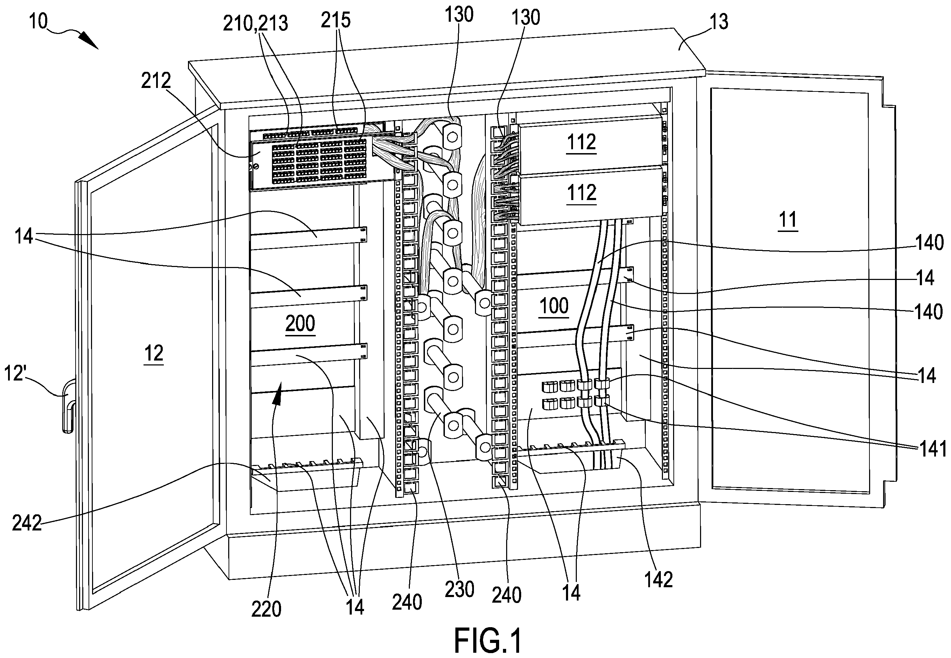

Figures 1, 2 and 6-7 show an outdoor telecommunications cabinet 10 according to an embodiment of the present disclosure.

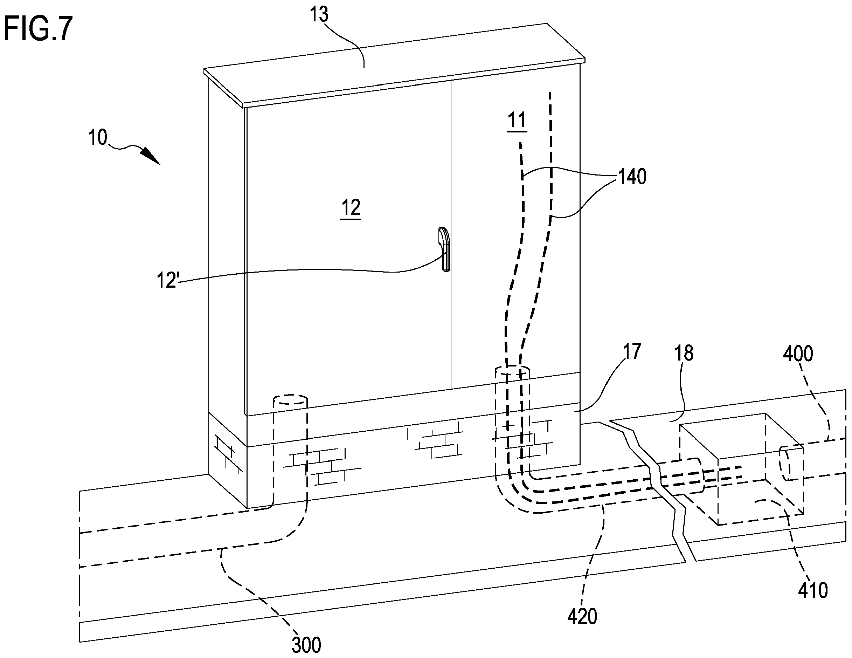

The outdoor telecommunications cabinet 10 might be mounted on a pedestal or other mount in an outdoor area (e.g. a residential, industrial or commercial area) where optical fibre connectivity for end users is desired. For example, in figure 7, the cabinet is shown mounted on a pedestal 17 in a street pavement 18.

In an embodiment, cabinet 10 provides a mutualization point for various external communication networks (generally indicated in figure 7 with the reference number 300) to be connected to a user network (generally indicated in figure 7 with the reference number 400) leading to user equipments (not shown) to provide optical fibre service and connectivity at user's locations (not shown).

In an embodiment, cabinet 10 is made from rigid plastics, or metals such as steel, stainless steel, or aluminium. Polycarbonate, glass-reinforced, and fibreglass materials can also be used where stronger cabinets are required, and may additionally have a gasket to exclude dust and moisture.

The cabinet 10 comprises a single piece case 13 having a box-shape with an interior space that can be accessed to by means of a first closure door 11 and a second closure door 12.

The interior space is compartmentalized into a first area 100, associated with the first closure door 11, and a second area 200, associated with the second closure door 12. The second closure door 12 can be closed/opened independently from the first closure door 11. In an embodiment, the second closure door 12 and the first closure door 11 are equipped with two different, indipendent electronic or mechanical locks 11', 12' so that they can be locked/unlocked independently from each other.

In the embodiement shown in the figures, the first area 100 is located on the right side of the cabinet 10, beside the second area 200, which is located on the left side of the cabinet 10. However, the two areas 100, 200 can also be located in different positions, for example one above the other.

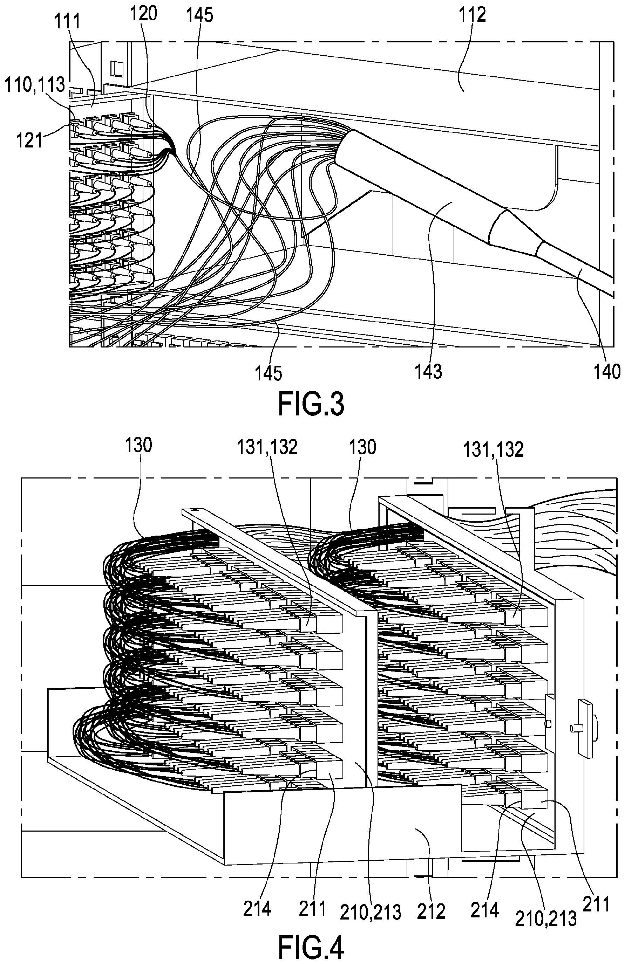

The first area 100 houses:
- a plurality (e.g. 144x2) of optic adapters 110 (visible only in figure 3);
- a corresponding plurality (e.g. 144x2) of connecting optical fibres 120 for connection to optical fibres (not shown) of the user network 400 (visible only in figure 3),
- a corresponding plurality (e.g. 144x2) of optical fibre patch cords 130.

The second area 200 houses:
- a connector holder 210 having a corresponding plurality (e.g. 144×2) of seats 211, and
- a free space 220 adapted to house, after installation on site of the cabinet 10, fibre optic cabling and accessories for connection to the external communication network 300.

As shown in figure 3, the plurality of optic adapters 110 can be arranged in one or more adapter arrays 111, each supported by a respective support and housed in a respective sub-rack 112. For illustrative purposes, in the figures two adapter arrays 111 are contemplated (e.g. each comprising 144 optic adapters), with the respective sub-racks 112 mounted one over the other on an upper part of a rear wall of the first area 100.

In the embodiment shown in figure 3, each adapter array 111 is housed in the respective sub-rack 112 with first (rear) sides 113 of the adapters 110 positioned at the back and second (front) sides of the adapters 110 positioned frontally. The first rear sides 113 of the adapters 110 are suitably configured (as in conventional optic adapters) to receive optical connectors 121 terminating the connecting optical fibres 120. The second (front) sides (not shown) of the adapters 110 are suitably configured (as in conventional optic adapters) to receive optical connectors (not shown) terminating the optical fibre patch cords 130.

Notwithstanding the above description, it will be clear that different numbers and arrangements of the adapters 110, adapter arrays 111 and sub-racks 112 inside the first area 100 can be provided.

The seats 211 of the connector holder 210 can be arranged in seat arrays 213, one for each adapter array 111. Each seat array 213 is supported by a respective support. In the embodiment shown in the figures, two seat arrays 213 are provided (e.g. each comprising 144 seats), housed in a same sub-rack 212 mounted on an upper part of a rear wall of the second area 200.

As shown if figure 4, the two seat arrays 213 are mounted within the sub-rack 212 so as to face each other. Each seat array 213 is housed in the sub-rack 212 with first (rear) sides 214 of the seats 211 positioned at the back and second, opposite (front) sides 215 of the seats 211 positioned frontally. The first (rear) sides 214 are configured to receive optical connectors 131 terminating the optical fibre patch cords 130. The second (front) sides 215 of seats 211 are closed.

The seats 211 can consist of optic adapters.

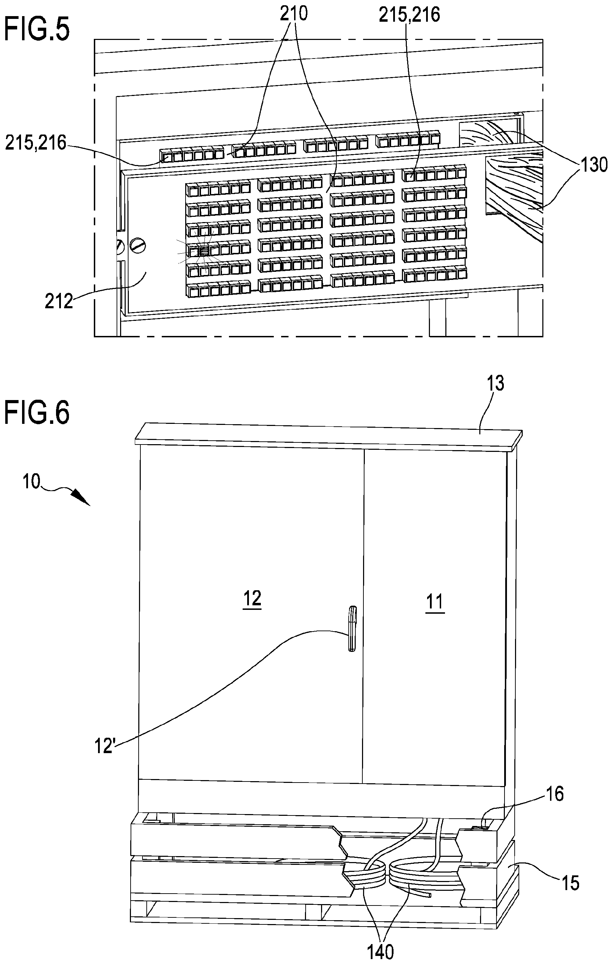

As shown in the embodiment of figure 5, the second (front) sides 215 of seats 211 are closed by means of transparent caps 216. When a connection to an end user is desired, this advantageously enables to recognize the patch cord 130 linking to said end user, by sending a luminous signal (e.g. from a LED light source) into an optical fibre at the end user side and watching which transparent cap 216 lights up at the connector holder 210.

In addition or alternative, the patch cord 130 linking to a desired end user can be recognized by means of a suitable identifying code.

In the embodiment shown in the figures, the sub-rack 212 is devoid of any front panel. This may be particularly useful when transparent caps 216 are used so as to guarantee immediate visibility of the transparent cap 216 which lights up.

In alternative, the sub-rack 212 may be provided with a front openable/removable panel.

Notwithstanding the above description, it will be clear that different numbers and arrangements of the seats 211, seat arrays 213 and sub-racks 212 inside the second area 200 can be provided.

The cabinet 10 has an internal frame 14 configured for enabling optical fibre cabling and accessories to be fixed within the cabinet 10. For example, the sub-racks 112 and the sub-rack 212 are suitably fixed to the internal frame 14.

At the sub-racks 112, the connecting optical fibres 120 branch off from one or more optical fibre cables 140 (two optical fibre cables 140 are exemplarily shown in figure 1, one for each sub-rack 112). For example, each optical fibre cable 140 comprises 144 connecting optical fibres 120. The optical fibre cables 140 are housed in the cabinet 10 to get to the subracks 112.

In the embodiment shown in figure 3, within each sub-rack 112, the respective optical fibre cable 140 terminates with a fan out 143 from which the connecting optical fibres 120 branch off, arranged in micro-modules 145, each comprising a number of the connecting optical fibres 120 (e.g. 12 micro-modules, each comprising 12 connecting optical fibres 120). Each micro-module 145 is for example equipped with a protective plastic jacket, enclosing the respective number of connecting optical fibres 120 as a whole.

As shown in figure 3, the fan out 143 and the micro-modules 145 branching off from one optical fibre cable 140 are arranged in the respective sub-rack 112, wherein the single connecting optical fibres 120 come out from the respective micro-modules 145 for connection to the adapters 110. Each optical fibre cable 140 comes out of the respective sub-rack 112.

The connecting optical fibres 120 have opposite free ends and teminated ends. As shown in figure 3, the terminated ends of connecting optical fibres 120 are terminated with respective optical fibre connectors 121 that are respectively engaged with the first (rear) sides 113 of the adapters 110.

As exemplarily shown in figure 7, the connecting optical fibres 120 each have an excess length to be deployed out from the cabinet 10 via suitable ducts 420 to an external joint 410 for splicing the free ends of the connecting optical fibres 120 to respective free ends of the optical fibres (not shown) of the user network 400.

The excess lengths of the connecting optical fibres 120 are such as to enable the free ends of the connecting optical fibres 120 to reach the position of the external joint 410. For example, they may be in the range of 20 to 50 meters.

As explained above, the excess lengths of the connecting optical fibres 120 are enclosed into the optical fibre cables 140 exiting the sub-racks 112.

In the embodiment shown, the cabinet 10 comprises fixing means 141 to fix the optical fibre cables 140 to the internal frame 14 of the cabinet 10.

In the embodiment shown, the first area 100 of the cabinet 10 has at the bottom an opening 142 for enabling the optical fibre cables 140 to exit the cabinet 10.

The optical fibre patch cords 130 have opposite first and second ends, all terminated with respective optical fibre connectors.

The optical fibre connectors (not shown) terminating the first ends of the patch cords 130 are respectively engaged with second (front) sides (not shown) of the adapters 110. On the other side, as shown in figure 4, the optical fibre connectors 131 terminating the second ends 132 of the patch cords 130 are respectively engaged with the first (rear) sides 214 of the seats 211 of the connector holder 210.

As stated above, the first (rear) sides 214 of the seats 211 of the connector holder 210 are located on a rear surface of the connector holder 210. As clear from figure 4, the two seat arrays 213 are mounted within the sub-rack 212 hinged to the internal frame 14 of the cabinet 10 so that they can be rotated singularly or together to access the first (rear) sides 214 of the seats 211 for connection to the optical fibre connectors 131 terminating the second ends 132 of the patch cords 130.

As shown in the embodiment of figure 3, also the the adapter arrays 111 can be mounted within the the sub-racks 112 hinged to the internal frame 14 of the cabinet 10 so that they can be rotated to access the first (rear) sides 113 of the adapters 110 for connection to the optical fibre connectors 121 of connecting optical fibres 120 (as shown in figure 3). Moreover, the sub-racks 112 will have an openable/removable front panel enabling access to the the second (front) sides (not shown) of the adapters 110 for connection to the optical fibre connectors (not shown) terminating the first ends of the patch cords 130.

In the embodiment shown, the patch cords 130 have an excess length to be deployed inside the free space 220 of the second area 200 for connection to the optical fibre cabling and/or accessories (not shown) of the external communication network 300, after they have been mounted in the free space 220.

The excess lengths of the patch cords 130 are such as to enable the optical fibre connectors 131 terminating the second ends 132 of the patch cords 130 (after extraction from the respective seats 211) to reach the optical fibre cabling and/or accessories of the external communication network 300. For example, they may be in the range of 2-10 meters meters.

In the embodiment shown, the second area 200 further comprises stowage mandrels 230 for winding at least part of the excess length of the patch cords 130 about them. In this way, the excess length of the patch cords 130 can be stored in a tidy manner, waiting to be deployed inside the free space 220, during use of the cabinet 10.

In the embodiment shown, the cabinet 10 also comprises guiding passages 240 for guiding the patch cords 130 from the respective adapters 110 to the respective stowage mandrels 230 and from the latter to the connector holder 210.

In an embodiment, before being installed on the field, the cabinet 10 is ready-made at the manufacturing factory, before installation of the cabinet 10 on site. In particular, the cabinet is pre-fabricated with the optical fibre cabling and accessories already mounted as described above. In particuar the adapter arrays 111 will be already mounted into the respective sub-racks 112, the seat arrays 213 will be already mounted into the sub-rack 212, the connecting optical fibres 120 will be pre-connected to the respective adapters 110, the patch cords 130 will be pre-connected on one side to the optic adapters 110 and, on the other side, to the seats 211. Moreover, the optical fibre cables 140 can be terminated with fan out 143 from which the connecting optical fibres 120 are branched off, arranged in micro-modules 145 at the manufacturing factory. As explained above with reference to figure 3, the fan out 143 and the micro-modules 145 can be pre-installed in the respective sub-rack 112, wherein the single connecting optical fibres 120 coming out from the respective micro-modules 145 are pre-connected to the adapters 110.

For transportation purposes, the ready-made cabinet 10 can be transported on a pallet 15 equipped with a box 16 storing the excess lenghts of the connecting optical fibres 120 enclosed into the optical fibre cables 140. An assembly comprising the cabinet 10 on pallet 15 equipped with box 16 is shown in figure 6.

On site, the cabinet 10 can be lifted from the pallet 15. As explained above with reference to figure 7, the optical fibre cables 140 housing the excess lenghts of the connecting optical fibres 120 can be routed in suitable ducts 420 to reach the external joint 410, and the cabinet 10 can be mounted on a pedestal or other mount 17 (e.g. fixed to a concrete base).

At the external joint 410 the free ends of the connecting optical fibres 120 will be spliced (e.g. by means of mechanical splices or fused fibre splices obtained by means of butt splicing between the fibres) to respective free ends of the optical fibres (not shown) of the user network 400. In this way, no splicing operations are required inside the first area 100 of the cabinet 10. In oder words, the cabinet 10 is devoid of splicings within the first area 100. Indeed, the connecting optical fibres 120 are devoid of optical accessories in the middle (such as a mechanical or fused splicings, joints, connectors), apart from the ends terminated with optical connectors 121. Considering that outdoor cabinets are often in locations which makes the splicing procedure not confortable, this adavantageously enables the responsible technicians to make the splicing, which is a quite critical operation, in a more convenient location at the joint 410 wherein they can work more safely and easily.

In view of the above description, it will be clear that, for installation of ready-made cabinet 10, the technician of the user network is only required -on the user network side- to route the optical cables 140 in the suitable ducts 420 to reach the external joint 410, and to splice, at the external joint 410, the free ends of the connecting optical fibres 120 to respective free ends of the optical fibres of the user network 400.

This advantageously enables to simplify and minimize the installation operations of the cabinet 10 on the user network side.

Further to the above advantages of the ready-made cabinet 10, it is noted that an embodiment of the cabinet 10 according to the present disclosure which is wholly or partly assembled on site (and not in its entirety at the manufacturing factory) is advantageous as well, as the assembling operations are simplified thanks to the fact that no splicing operations are required inside the first area 100.

Once installed on site as explained above, the cabinet 10 is ready for connecting the user network 400 to external communication networks 300. For this connection, the optical fibre cabling and accessories housed in the first area 100 need not to be accessed by the technicians of external communication networks, that can make the required connections by only accessing the second area 200 of the cabinet 10.

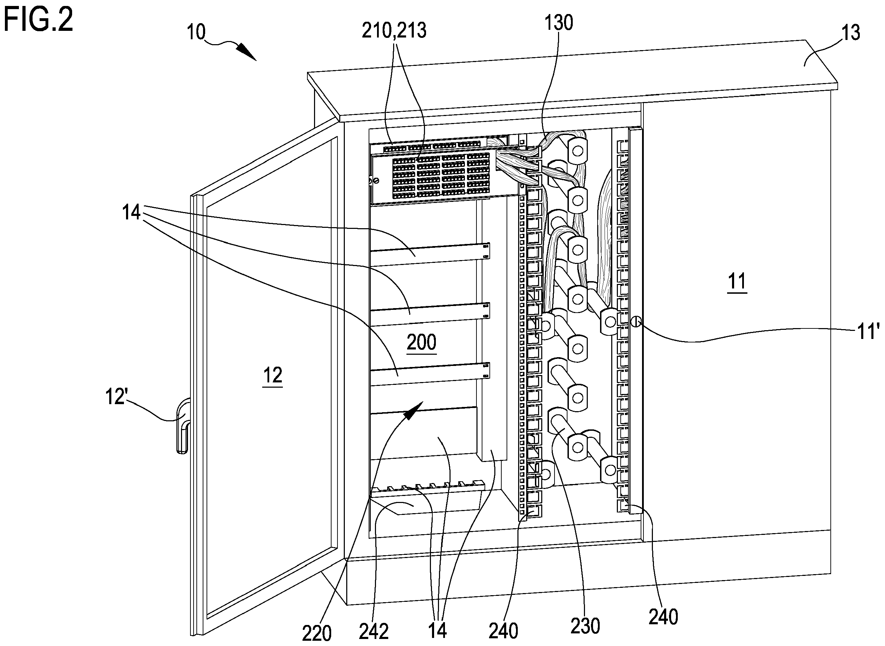

As shown in figure 2, the first closure door 11 can thus be locked and its access can be restricted to trusted technicians operating for the user network operator only. In this way, the first area 100 is secured.

When a connection to an external communication network 300 (handled by a specific telecommunications operator) is required, the telecommunications operator will have to install the required optical fibre cabling and accessories into the free space 220 of the second area 200, by fixing them to the internal frame 14 of the cabinet 10. Such optical fibre cabling and accessories can comprise, for examples, pigtails, patch cords, optical fibre cables, optic adapters, splicing trays, splitters, and similar devices.

An opening 242 is provided at the bottom of the second area 200 of the cabinet 10 for enabling passage of required optical fibre cabling.

The optical fibre cabling will comprise, for example, pigtails (not shown) connecting to the external communication network 300 and terminated at one end with suitable optical connectors. In order to make a connection with predetermined end users, these pigtails will have to be connected to selected patch cords 130 of cabinet 10 (the ones connecting to the desired end users). To do this, the optical fibre connectors 131 terminating the second ends 132 of the selected patch cords 130 will be disengaged from the respective seats 211 of the connector holder 210 wherein they are temporaly parked, to be connected to the connectors of the pigtails of the external communication network 300 (e.g. by means of suitable adapters, not shown, as part of the accessories of the external communication network installed into the free space 220).

The connector holder 210 thus acts as a temporary parking area for the optical fibre connectors 131 terminating the second ends 132 of the selected patch cords 130.

Accordingly, the management of optical fibre cabling and connections in the second area 200 is simpliflied. Indeed, different telecommunication operators willing to connect their external telecommunication networks 300 to end users of the user network 400, simply have to make a connection of their cabling to the appropriate second end connectors 131 of the patch cords 130 (which are already tidily installed in the cabinet 10), after extracting them from the relevant seats 211 of the connector holder 210 (e.g. in case of a first connection to the end users) or after disconnecting them from the cabling of a previous telecommunication operator (in case the end users switch from one operator to another). In order to facilitate identification of the patch cord 130 linking to a desired end user, the solution disclosed with reference to the figure 5, wherein the second (front) sides 215 of seats 211 are closed by means of transparent caps 216, can advantageously be used.

The installation operations on the external telecommunication side are thus simplified as well. Moreover, maintenance of a certain tidiness inside the cabinet is facilitated, even after few years of exploitation.

## Claims

1. Outdoor telecommunications cabinet (10) for connecting an external communication network (300) to a user network (400), made of a single piece case (13) comprising:
- a first area (100) associated with a first closure door (11), housing:
• a plurality of optic adapters (110) having opposite first (113) and second sides;
• a corresponding plurality of connecting optical fibres (120) for connection to optical fibres of the user network (400), the connecting optical fibres (120) having opposite free ends and terminated ends, terminated with respective optical fibre connectors (121) that are respectively engaged with the first sides (113) of the adapters (110),
**characterized in** further comprising:
• a corresponding plurality of optical fibre patch cords (130) having opposite first and second (132) ends terminated with respective optical fibre connectors (131), the optical fibre connectors terminating the first ends being respectively engaged with the second sides of the adapters (110); and
- a second area (200) associated with a second closure door (12), housing:
• a connector holder (210) having a plurality of seats (211) adapted to temporaly hold the optical fibre connectors (131) terminating the second ends (132) of the patch cords (130),
• a space (220) adapted to house, after installation on site of the cabinet (10), fibre optic cabling and accessories for connection to the external communication network (300),
• the connector holder (210) acting as a temporary parking area for the optical fibre connectors (131) terminating the second ends (132) of the patch cords (130), waiting to be connected to said optical fibre cabling and/or accessories for connection to the external communication network (300).

2. Outdoor telecommunications cabinet (10) according to claim 1, wherein the cabinet (10) is a ready-made cabinet (10) wherein the first area (100) is pre-fabricated with the plurality of optic adapters (110), the corresponding plurality of connecting optical fibres (120), and the corresponding plurality of optical fibre patch cords (130); and the second area (200) is pre-fabricated with the connector holder (210) with the plurality of seats (211), and:
- the optical fibre connectors (121) terminating the connecting optical fibres (120) are pre-engaged with the first sides (113) of the adapters (110),
- the optical fibre connectors terminating the first ends of the patch cords (130) are pre-engaged with the second sides of the adapters;
- the optical fibre connectors (131) terminating the second ends (132) of the patch cords (130) are pre-engaged with the seats (211) of the connector holder (210).

3. Outdoor telecommunications cabinet (10) according to claims 1 or 2, wherein the connecting optical fibres (120) each have an excess length to be deployed out from the cabinet (10) to an external joint (410) for splicing the free ends of the connecting optical fibres (120) to respective free ends of the optical fibres of the user network (400).

4. Outdoor telecommunications cabinet (10) according to claim 3, wherein the excess lengths of the connecting optical fibres (120) are enclosed into at least one optical fibre cable (140).

5. Outdoor telecommunications cabinet (10) according to claim 4, wherein the first area (100) of the cabinet (10) has an opening (142) for enabling said at least one optical fibre cable (140) to exit the cabinet (10).

6. Outdoor telecommunications cabinet (10) according to any of the previous claims, wherein the patch cords (130) have an excess length adapted to be deployed inside the second area (200) for connection to the fibre optic cabling and/or accessories of the external communication network (300).

7. Outdoor telecommunications cabinet (10) according to claim 6, wherein the second area (200) further comprises stowage mandrels (230) for winding at least part of the excess length of the patch cords (130) about them.

8. Outdoor telecommunications cabinet according to any of the previous claims, wherein the first closure door (11) can be locked/unlocked independently from the second closure door (12).

9. Outdoor telecommunications cabinet (10) according to any of previuos claims 3-8, wherein the excess lengths of the connecting optical fibres (120) are over 10 meters.

10. Outdoor telecommunications cabinet (10) according to any of the previous claims, wherein the seats (211) have first open sides (214) configured to receive the optical fibre connectors (131) terminating the second ends (132) of the patch cords (130), and opposite second sides (215), which are closed.

11. Outdoor telecommunications cabinet (10) according to claim 10, wherein the second closed sides (215) of the seats (211) are closed by means of transparent caps (216).

12. An assembly comprising the outdoor cabinet (10) according to any of the previous claims 3-11, and a box (16) disposed near the cabinet (10) to store the excess lenghts of the connecting optical fibres (120) out from the cabinet (10), before deployment from the cabinet (10) to the external joint (410).

13. Method of installation of an outdoor telecommunications cabinet (10) according to any of the previous claims 1-11, comprising:
- mounting the cabinet (10) into a dedicated outdoor place;
- making the connection between the free ends of the connecting optical fibres (120) and respective ends of the optical fibres of the user network (400) in a connection point out from the cabinet (10).

14. Method according to claim 13, further comprising installing the fibre optic cabling and/or accessories of the external communication network (300) in the relevant space (220) of the second area (200).

15. Method according to claim 14, further comprising extracting from the connector holder (210) at least part of the optical fibre connectors (131) terminating the second ends (132) of the optical fibre patch cords (130) and connecting them to the fibre optic cabling and/or accessories of the external communication network (300) installed in the relevant space (220) of the second area (200).

## Patentansprüche

1. Telekommunikationsschrank (10) für den Außenbereich zum Anschluss eines externen Kommunikationsnetzes (300) an ein Benutzernetz (400), bestehend aus einem einteiligen Gehäuse (13), das Folgendes umfasst:
- einen ersten Bereich (100), der mit einer ersten Verschlusstür (11) verbunden ist und Folgendes enthält:
- eine Vielzahl von optischen Adaptern (110) mit gegenüberliegenden ersten (113) und zweiten Seiten; - eine entsprechende Vielzahl von Verbindungslichtleitfasern (120) zur Verbindung mit Lichtleitfasern des Anwendernetzes (400), wobei die Verbindungslichtleitfasern (120) gegenüberliegende freie Enden und abgeschlossene Enden aufweisen, die mit jeweiligen Lichtleitfaserverbindern (121) abgeschlossen sind, die jeweils mit den ersten Seiten (113) der Adapter (110) in Eingriff stehen, **dadurch gekennzeichnet, dass** sie ferner umfassen:
- eine entsprechende Vielzahl von Lichtwellenleiter-Patchkabeln (130) mit gegenüberliegenden ersten und zweiten (132) Enden, die mit entsprechenden Lichtwellenleiter-Steckverbindern (131) abgeschlossen sind, wobei die Lichtwellenleiter-Steckverbinder, die die ersten Enden abschließen, jeweils mit den zweiten Seiten der Adapter (110) in Eingriff stehen, und
- einen zweiten Bereich (200), der mit einer zweiten Verschlusstür (12) verbunden ist, die ein Gehäuse aufweist,
- einen Verbinderhalter (210) mit einer Vielzahl von Sitzen (211), die dazu geeignet sind, vorübergehend die Glasfaserverbinder (131) zu halten, die die zweiten Enden (132) der Patchkabel (130) abschließen,
- einen Raum (220), der dazu geeignet ist, nach der Installation an einem Ort des Schranks (10) Glasfaserkabel und Zubehör für den Anschluss an das externe Kommunikationsnetz (300) aufzunehmen,
- wobei der Verbinderhalter (210) als vorübergehender Abstellplatz für die Glasfaserverbinder (131) dient, die die zweiten Enden (132) der Patchkabel (130) abschließen und darauf warten, mit der Glasfaserverkabelung und/oder dem Zubehör für den Anschluss an das externe Kommunikationsnetz (300) verbunden zu werden.

2. Telekommunikationsschrank (10) für den Außenbereich nach Anspruch 1, wobei der Schrank (10) ein vorgefertigter Schrank (10) ist, bei dem der erste Bereich (100) mit der Vielzahl von optischen Adaptern (110), der entsprechenden Vielzahl von verbindenden optischen Fasern (120) und der entsprechenden Vielzahl von optischen Faser-Patchkabeln (130) vorgefertigt ist; und der zweite Bereich (200) mit dem Steckerhalter (210) mit der Vielzahl von Sitzen (211) vorgefertigt ist, und:
- die Lichtwellenleiter-Steckverbinder (121), die die verbindenden Lichtwellenleiter (120) abschließen, mit den ersten Seiten (113) der Adapter (110) vorverriegelt sind,
- die Lichtwellenleiter-Steckverbinder, die die ersten Enden der Patchkabel (130) abschließen, mit den zweiten Seiten der Adapter vorverriegelt sind;
- die Lichtwellenleiter-Steckverbinder (131), die die zweiten Enden (132) der Patchkabel (130) abschließen, mit den Sitzen (211) des Steckerhalters (210) vorverriegelt sind.

3. Telekommunikationsschrank (10) für den Außenbereich nach Anspruch 1 oder 2, wobei die Verbindungs-Lichtwellenleiter (120) jeweils eine Überlänge aufweisen, die aus dem Schrank (10) zu einer externen Verbindung (410) zum Spleißen der freien Enden der Verbindungs-Lichtwellenleiter (120) mit den jeweiligen freien Enden der Lichtwellenleiter des Benutzernetzes (400) herausgeführt werden.

4. Telekommunikationsschrank (10) für den Außenbereich nach Anspruch 3, wobei die Überlängen der Verbindungs-Lichtwellenleiter (120) in mindestens ein Lichtwellenleiterkabel (140) eingeschlossen sind.

5. Telekommunikationsschrank (10) für den Außenbereich nach Anspruch 4, wobei der erste Bereich (100) des Schranks (10) eine Öffnung (142) aufweist, die es dem mindestens einen Glasfaserkabel (140) ermöglicht, den Schrank (10) zu verlassen.

6. Telekommunikationsschrank (10) für den Außenbereich nach einem der vorhergehenden Ansprüche, wobei die Patchkabel (130) eine Überlänge aufweisen, die geeignet ist, innerhalb des zweiten Bereichs (200) zur Verbindung mit der Glasfaserverkabelung und/oder dem Zubehör des externen Kommunikationsnetzes (300) eingesetzt zu werden.

7. Telekommunikationsschrank (10) für den Außenbereich nach Anspruch 6, wobei der zweite Bereich (200) ferner Stauraumdorne (230) zum Aufwickeln zumindest eines Teils der Überlänge der Patchkabel (130) über sie umfasst.

8. Telekommunikationsschrank (10) für den Außenbereich nach einem der vorhergehenden Ansprüche, wobei die erste Verschlusstür (11) unabhängig von der zweiten Verschlusstür (12) verriegelt/entriegelt werden kann.

9. Telekommunikationsschrank (10) für den Außenbereich nach einem der vorhergehenden Ansprüche 3-8, wobei die Überlängen der verbindenden optischen Fasern (120) über 10 Meter betragen.

10. Telekommunikationsschrank (10) für den Außenbereich nach einem der vorhergehenden Ansprüche, wobei die Sitze (211) erste offene Seiten (214) haben, die so konfiguriert sind, dass sie die Glasfaserverbinder (131) aufnehmen, die die zweiten Enden (132) der Patchkabel (130) abschließen, und gegenüberliegende zweite Seiten (215), die geschlossen sind.

11. Telekommunikationsschrank (10) für den Außenbereich nach Anspruch 10, wobei die zweiten geschlossenen Seiten (215) der Sitze (211) mittels transparenter Kappen (216) geschlossen sind.

12. Baugruppe, die den Telekommunikationsschrank (10) nach einem der vorhergehenden Ansprüche 3-11 und einen in der Nähe des Telekommunikationsschranks (10) angeordneten Kasten (16) umfasst, um die überschüssigen Längen der verbindenden optischen Fasern (120) außerhalb des Telekommunikationsschranks (10) zu lagern, bevor sie aus dem Telekommunikationsschrank (10) zu der externen Verbindung (410) ausgebracht werden.

13. Verfahren zur Installation eines Telekommunikationsschranks (10) für den Außenbereich nach einem der vorhergehenden Ansprüche 1-11, umfassend:
- Anbringen des Schranks (10) an einem dafür vorgesehenen Platz im Freien;
- Herstellen der Verbindung zwischen den freien Enden der optischen Verbindungsfasern (120) und den jeweiligen Enden der optischen Fasern des Benutzernetzes (400) an einem Verbindungspunkt außerhalb des Schranks (10).

14. Verfahren nach Anspruch 13, ferner umfassend die Installation der faseroptischen Verkabelung und/oder des Zubehörs des externen Kommunikationsnetzes (300) in dem betreffenden Raum (220) des zweiten Bereichs (200).

15. Verfahren nach Anspruch 14, ferner umfassend das Herausziehen von mindestens einem Teil der Lichtwellenleiter-Steckverbinder (131), die die zweiten Enden (132) der Lichtwellenleiter-Patchkabel (130) abschließen, aus dem Steckverbinderhalter (210) und das Verbinden derselben mit der Lichtwellenleiter-Verkabelung und/oder dem Zubehör des externen Kommunikationsnetzes (300), das in dem betreffenden Raum (220) des zweiten Bereichs (200) installiert ist.

## Revendications

1. Armoire de télécommunication extérieure (10) pour la connexion d'un réseau de communication externe (300) à un réseau d'utilisateurs (400), constituée d'un boîtier monobloc (13) comprenant :
- une première zone (100) associée à une première porte de fermeture (11), logeant :
• une pluralité d'adaptateurs optiques (110) ayant des premiers (113) et seconds côtés opposés ;
• une pluralité correspondante de fibres optiques de connexion (120) pour la connexion à des fibres optiques du réseau d'utilisateurs (400), les fibres optiques de connexion (120) ayant des extrémités libres et des extrémités terminées opposées, terminées avec des connecteurs de fibres optiques (121) respectifs qui sont respectivement raccordés avec les premiers côtés (113) des adaptateurs (110),
**caractérisée en ce qu'**elle comprend en outre :
• une pluralité correspondante de cordons de raccordement de fibres optiques (130) ayant des premières et secondes (132) extrémités opposées, terminées avec des connecteurs de fibres optiques (131) respectifs, les connecteurs de fibres optiques terminant les premières extrémités étant respectivement raccordés avec les seconds côtés des adaptateurs (110) ; et
- une seconde zone (200) associée à une seconde porte de fermeture (12), logeant :
• un porte-connecteur (210) ayant une pluralité de sièges (211) adaptés pour supporter temporairement les connecteurs de fibres optiques (131) terminant les secondes extrémités (132) des cordons de raccordement (130),
• un espace (220) adapté pour loger, après l'installation sur le site de l'armoire (10), des câblages et accessoires de fibres optiques pour la connexion au réseau de communication externe (300),
• le porte-connecteur (210) agissant comme une zone de stationnement temporaire pour les connecteurs de fibres optiques (131) terminant les secondes extrémités (132) des cordons de raccordement (130), en attente d'être connectés auxdits câblages et/ou accessoires de fibres optiques pour la connexion au réseau de communication externe (300).

2. Armoire de télécommunication extérieure (10) selon la revendication 1, dans laquelle l'armoire (10) est une armoire prête à l'emploi (10) dans laquelle la première zone (100) est préfabriquée avec la pluralité d'adaptateurs optiques (110), la pluralité correspondante de fibres optiques de connexion (120) et la pluralité correspondante de cordons de raccordement de fibres optiques (130) ; et la seconde zone (200) est préfabriquée avec le porte-connecteur (210) avec la pluralité de sièges (211), et :
- les connecteurs de fibres optiques (121) terminant les fibres optiques de connexion (120) sont pré-raccordés avec les premiers côtés (113) des adaptateurs optiques (110),
- les connecteurs de fibres optiques terminant les premières extrémités des cordons de raccordement (130) sont pré-raccordés avec les seconds côtés des adaptateurs ;
- les connecteurs de fibres optiques (131) terminant les secondes extrémités (132) des cordons de raccordement (130) sont pré-raccordés avec les sièges (211) du porte-connecteur (210).

3. Armoire de télécommunication extérieure (10) selon les revendications 1 ou 2, dans laquelle les fibres optiques de connexion (120) ont chacune une longueur excédentaire pour être déployée hors de l'armoire (10) vers un joint externe (410) pour réaliser une épissure entre les extrémités libres des fibres optiques de connexion (120) et des extrémités libres respectives des fibres optiques du réseau d'utilisateurs (400).

4. Armoire de télécommunication extérieure (10) selon la revendication 3, dans laquelle les longueurs excédentaires des fibres optiques de connexion (120) sont enfermées dans au moins un câble de fibres optiques (140).

5. Armoire de télécommunication extérieure (10) selon la revendication 4, dans laquelle la première zone (100) de l'armoire (10) comporte une ouverture (142) pour permettre audit au moins un câble de fibres optiques (140) de sortir de l'armoire (10).

6. Armoire de télécommunication extérieure (10) selon l'une quelconque des revendications précédentes, dans laquelle les cordons de raccordement (130) ont une longueur excédentaire adaptée pour être déployée à l'intérieur de la seconde zone (200) pour la connexion aux câblages et/ou accessoires de fibres optiques du réseau de communication externe (300).

7. Armoire de télécommunication extérieure (10) selon la revendication 6, dans laquelle la seconde zone (200) comprend en outre des mandrins de rangement (230) pour enrouler au moins une partie de la longueur excédentaire des cordons de raccordement (130) autour de ceux-ci.

8. Armoire de télécommunication extérieure selon l'une quelconque des revendications précédentes, dans laquelle la première porte de fermeture (11) peut être verrouillée/déverrouillée indépendamment de la seconde porte de fermeture (12).

9. Armoire de télécommunication extérieure (10) selon l'une quelconque des revendications précédentes 3 à 8, dans laquelle les longueurs excédentaires des fibres optiques de connexion (120) sont supérieures à 10 mètres.

10. Armoire de télécommunication extérieure (10) selon l'une quelconque des revendications précédentes, dans laquelle les sièges (211) ont des premiers côtés ouverts (214) configurés pour recevoir les connecteurs de fibres optiques (131) terminant les secondes extrémités (132) des cordons de raccordement (130), et des seconds côtés (215) opposés, qui sont fermés.

11. Armoire de télécommunication extérieure (10) selon la revendication 10, dans laquelle les seconds côtés fermés (215) des sièges (211) sont fermés au moyen de capuchons transparents (216).

12. Ensemble comprenant l'armoire extérieure (10) selon l'une quelconque des revendications précédentes 3 à 11, et une caisse (16) disposée près de l'armoire (10) pour stocker les longueurs excédentaires des fibres optiques de connexion (120) à l'extérieur de l'armoire (10), avant un déploiement depuis l'armoire (10) jusqu'au joint externe (410).

13. Procédé d'installation d'une armoire de télécommunication extérieure (10) selon l'une quelconque des revendications précédentes 1 à 11, comprenant :
- le montage de l'armoire (10) dans un emplacement extérieur dédié ;
- la réalisation de la connexion entre les extrémités libres des fibres optiques de connexion (120) et des extrémités libres respectives des fibres optiques du réseau d'utilisateurs (400) dans un point de connexion à l'extérieur de l'armoire (10).

14. Procédé selon la revendication 13, comprenant en outre l'installation des câblages et/ou accessoires de fibres optiques du réseau de communication externe (300) dans l'espace correspondant (220) de la seconde zone (200).

15. Procédé selon la revendication 14, comprenant en outre l'extraction par rapport au porte-connecteur (210) d'au moins une partie des connecteurs de fibres optiques (131) terminant les secondes extrémités (132) des cordons de raccordement de fibres optiques (130) et leur connexion aux câblages et/ou accessoires de fibres optiques du réseau de communication externe (300) installés dans l'espace correspondant (220) de la seconde zone (200).
